# EUROPÄISCHE PATENTANMELDUNG

(11) **EP 0 686 826 A1**
(43) Veröffentlichungstag der Anmeldung: **13.12.1995**
(21) Anmeldenummer: 95108898.8
(22) Anmeldetag: 09.06.1995
(51) Int. Cl.: G01B 7/06, G01B 101/60, G01B 121/04

(54) **Messvorrichtung für die berührungslose Dickenmessung von bewegten Langprodukten, insbesondere Flachprodukten**

(30) Priorität: 10.06.1994 DE 4420297
(71) Anmelder: FRIEDRICH THEYSOHN GmbH, D-30853 Langenhagen (DE)
(72) Erfinder: Krüger, Ernst, Dr., D-49124 Georgsmarienhütte (DE); Klose, Reinhard, D-31737 Rinteln (DE); Klöden, Rolf, D-09221 Klaffenbach, Chemnitz (DE)
(74) Vertreter: Cohausz & Florack

(57) **Zusammenfassung**

Die Erfindung betrifft eine Meßvorrichtung für die berührungslose Dickenmessung von bewegten Flachprodukten, insbesondere Folien, mittels eines Meßkopfes (2) auf kapazitiver Basis. Durch ein zwischen dem Flachprodukt (1) und dem Meßkopf (2) eingeblasenes Blasmittel wird ein solcher Staudruck aufgebaut, daß der Meßkopf auf konstantem Abstand zum Flachprodukt (1) gehalten wird.

## Beschreibung

Die Erfindung bezieht sich auf eine Meßvorrichtung für die berührungslose Dickenmessung von bewegten Langprodukten, insbesondere Flachprodukten, mit einem kapazitiven Meßkopf und einer dessen Meßwerte verarbeitenden Auswerteeinrichtung.

Für die Anwendung der Meßvorrichtung kommen verschiedene Langprodukte in Betracht, wie Rohre, Profile, vor allem aber Flachprodukte, insbesondere Folien.

Ein Qualitätsmerkmal für die Weiterverwendung von Langprodukten, insbesondere Folien ist deren Dicke. Schon geringe Dickenunterschiede führen zu Schwierigkeiten bei der Weiterverarbeitung der Folie. Unterschiedlich dicke Folien liegen nicht eben auf, verwellen oder verwerfen sich, so daß sich bei ihrem Einsatz in Mehrfarbendruckanlagen keine eindeutigen Farbzuordnungen bzw. Farborte erreichen lassen. Aus dem gleichen Grunde lassen sich solche Folien nicht sehr genau schneiden. Auch lassen sich keine Schweißungen an exakt definierten Punkten vornehmen. Neben diesen Nachteilen für die Weiterverarbeitung besteht ein weiterer Nachteil von unterschiedlich dicken Folien darin, daß zur Einhaltung einer Mindestdicke es nötig ist, die Folie von vornherein dicker zu bemessen, was zu einem unnötig hohen Materialeinsatz führt.

Dickenschwankungen können sowohl in der Längsrichtung als auch quer zur Extrusionsrichtung oder am Umfang von Blasköpfen des Extruders auftreten. Ursache für diese Dickenschwankungen sind Schwankungen im Material, thermische Effekte und Einstellungsfehler am Extensionswerkzeug (Düse). Die Auswirkungen dieser Ursache zeigen sich in der Regel in Form von allmählichen Dickenveränderungen. Kurzfristige Dickenveränderungen sind sehr selten.

Um die Dicke der Folie zu messen, gibt es verschiedene Meßvorrichtungen. Berührungslos arbeitende Meßvorrichtungen haben gegenüber berührenden Meßvorrichtungen den Vorteil, daß sie auf der Oberfläche des Flachproduktes keine Meßspuren hinterlassen. Unter den berührungslos arbeitenden Meßvorrichtungen haben solche auf radiologischer Basis den Nachteil, daß sie zum einen sehr teuer sind und zum anderen von den Benutzern auch aus anderen Gründen nicht gern eingesetzt werden. Meßvorrichtungen auf Ultraschallbasis haben den Nachteil, daß sie zwischen dem Flachprodukt und einem Ultraschallmeßkopf ein Koppelmedium, beispielsweise Wasser, benötigen. Deshalb lassen sich solche Meßvorrichtungen nur dort einsetzen, wo es möglich ist, die Meßköpfe in einem Wasserbad anzuordnen. Das ist verhältnismäßig aufwendig.

Den geringsten meßtechnischen Aufwand erfordern Meßvorrichtungen auf kapazitiver Basis. Eine Schwierigkeit bei solchen Meßvorrichtungen besteht allerdings darin, daß sie eindeutige Meßergebnisse nur liefern, wenn der Abstandzwischen einem Meßkopf und dem Flachprodukt konstant gehalten wird. Außerdem reagieren solche Meßvorrichtungen empfindlich auf Temperaturschwankungen des Flachproduktes und der Luftfeuchtigkeit zwischen dem Meßkopf und dem Flachprodukt.

Der Erfindung liegt die Aufgabe zugrunde, eine Meßvorrichtung der eingangs genannten Art zu schaffen, bei der mit einfachen Mitteln der Abstand zwischen dem Meßkopf und dem Langprodukt konstant gehalten wird.

Diese Aufgabe wird erfindungsgemäß dadurch gelöst, daß dem Meßkopf mindestens eine Blasdüse zugeordnet ist, die mit ihrem Blasmittel zwischen dem Meßkopf und dem Langprodukt solche Druckverhältnisse aufbaut, daß der Abstand zwischen dem Meßkopf und dem Langprodukt konstant bleibt.

Bei der erfindungsgemäßen Meßvorrichtung wird mit den einfachen Mitteln der von der berührungslosen Führung von Materialbahnen mittels Blasmittel bewährten Technik (Luftkissendüse, Tragflächendüse) der Meßkopf in einem möglichst kleinen, konstanten Abstand von dem Langprodukt gehalten. Dabei wird das kapazitive Streumeßfeld in seiner Größe primär von der Dicke des Langproduktes bestimmt. Der nach einer bevorzugten Ausgestaltung der Erfindung in Richtung des Langproduktes vorbelastete Meßkopf folgt dabei der Bewegung des Langproduktes unter Aufrechterhaltung des aufgebauten Staudruckes. Die Art der Vorbelastung des Meßkopfes in Richtung des Langproduktes kann unterschiedlich sein. Wenn der Meßkopf über dem Langprodukt angeordnet ist, kann die Vorbelastung durch sein Eigengewicht aufgebracht werden. In jedem Fall ist der Meßkopf vorzugsweise in einer Führung relativ beweglich in Richtung des Langproduktes gehalten und über ein vom Staudruck erzeugtes Blasmittelpolster an bzw. auf dem Langprodukt abgestützt.

Zur Einhaltung eines konstanten kleinen Abstandes des Meßkopfes vom Langprodukt kann ein Sensor für die Messung des Abstandes des Meßkopfes von dem Langprodukt vorgesehen sein, in Abhängigkeit von dessen Meßwert ein Stellglied auf den Meßkopf und/oder die Blasdüse einwirkt. Auf diese Art und Weise ist es möglich, über den Staudruck und/oder die Vorbelastung des Meßkopfes dessen Abstand zu korrigieren. Das Abstandssignal kann vom Sensor des Meßkopfes oder von einem zusätzlichen Sensor abgeleitet werden.

Nach einer Ausgestaltung der Erfindung ist der Meßkopf durch eine Blasmittelumspülung gekühlt. Der Einsatz von Blasmittel macht es auch leicht möglich, den Meßkopf an seiner Meßseite durch eine Blasmittelumströmung von sich sonst niederschlagenden Verunreinigungen freizuhalten.

Um den Einfluß von Temperatur und/oder Feuchtigkeit auf das Meßergebnis für die Dicke des Langproduktes freizuhalten, kann nach einer weiteren Ausgestaltung der Erfindung die Auswerteeinrichtung von einem Temperaturmesser und/oder einem Feuchtigkeitsmesser Meßwerte erhalten, die sie bei der Bestimmung der Dicke des Langproduktes berücksichtigt.

Im folgenden wird die Erfindung anhand einer Zeichnung näher erläutert, die in schematischer Darstellung eine Meßvorrichtung in Seitenansicht zeigt.

Ein bewegtes Langprodukt, im Beispiel eine durch z.B. Blasfolienextrusion hergestellte Folie 1, wird in Pfeilrichtung vertikal gefördert. An einer Seite ist die erfindungsgemäße, kapazitiv arbeitende Meßvorrichtung angeordnet. Die Meßvorrichtung weist einen Meßkopf 2 auf, der mittels einer Führung 3 senkrecht zur Folie 1 beweglich ist. Von einem Zylinder 4 wird der Meßkopf 2 mit konstanter Kraft in Richtung der Folie 1 beaufschlagt. Der Meßkopf 2 wird jedoch durch ein Blasmittelpolster, das zwischen ihm und der Folie 1 aufgebaut wird, auf konstantem Abstand von der Folie gehalten.

Dieses Blasmittelpolster wird aufgebaut zwischen zwei insbesondere schlitzförmigen Blasdüsen 5. Vorzugsweise ist ihre Blasrichtung schräg zur Folie 1, wobei eine Blasmittelkompontente beider Düsen 5 aufeinander zu gerichtet sind. Eine solche Blasmitteldüsenanordnung ist aus der Technik der schwebenden Führung von Materialbahnen als "Luftkissendüse" bekannt.

Anstelle einer solchen, einen konstanten Abstand aufrechterhaltenden "Luftkissendüse" könnte auch eine sogenannte "Tragflächendüse" vorgesehen sein, die ebenfalls aus der Technik der schwebenden Führung von Materialbahnen bekannt sind. Unter diesen Düsen gibt es Anordnungen, die im Fernbereich der Folie von dem Meßkopf anziehend und im Nahbereich abstoßend wirken, also dazwischen einen Bereich haben, in dem die Folie 1 auf konstantem Abstand gehalten wird. Beim Einsatz solcher Düsen würde sich sogar die bei Luftkissendüsen notwendige Vorbelastung des Meßkopfes 2 erübrigen.

Der Meßkopf 2 weist an seiner der Folie 1 zugekehrten Seite einen kapazitiven Meßsensor 6 auf, der seine Meßwerte an eine Auswerteeinrichtung 7 liefert. Diese Auswerteeinrichtung 7 erhält weitere Meßwerte von einem nicht dargestellten Temperaturmesser für die Folie 1 und einem ebenfalls nicht dargestellten Feuchtigkeitsmesser für die Feuchtigkeit im Spalt zwischen der Folie 1 und dem Meßkopf 2. Diese zusätzlichen Meßwerte für die Temperatur und/oder Feuchtigkeit verarbeitet die Auswerteeinrichtung 7 zur Kompensation der Meßwerte, die vom kapazitiven Meßsensor 6 für die Dicke der Folie 1 erhalten werden.

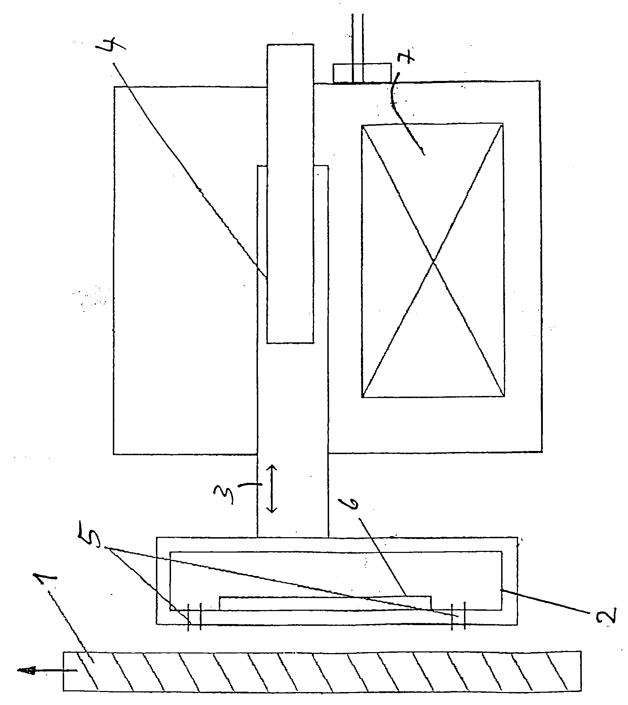

Der Meßkopf 2 weist neben dem Meßsensor 6 einen weiteren in der Zeichnung nicht dargestellten Meßsensor für die Messung des Abstandes des Meßkopfes 2 von der Folie 1 auf. Dieser Meßwert oder ein aus dem Meßwert des Meßsensors 6 für die Dicke der Folie abgeleiteter Meßwert wird einem Stellglied zugeleitet, mit dem der Abstand des Meßkopfes 2 von der Folie 1 eingestellt werden kann. Dies kann entweder über das Blasmittel erfolgen, das den Staudruck zwischen dem Meßkopf 2 und der Folie 1 aufbaut, oder über die Vorbelastung des Meßkopfes, insbesondere über den Zylinder 4.

## Patentansprüche

1. Meßvorrichtung für die berührungslose Dickenmessung von bewegten Langprodukten, insbesondere Flachprodukten (1), mit einem auf kapazitiver Basis arbeitenden Meßkopf (2) und einer dessen Meßwerte verarbeitenden Auswerteeinrichtung (7), **dadurch gekennzeichnet,** daß dem Meßkopf (2) mindestens eine Blasdüse (5) zugeordnet ist, die mit ihrem Blasmittel zwischen dem Meßkopf (2) und dem Langprodukt (1) solche Druckverhältnisse aufbaut, daß der Abstand zwischen dem Meßkopf (2) und dem Langprodukt konstant bleibt.

2. Meßvorrichtung nach Anspruch 1, **dadurch gekennzeichnet,** daß der in Richtung des Langproduktes (1) vorbelastete Meßkopf (2) mit einer Führung (3) relativ beweglich in Richtung des Langproduktes (1) gehalten und über ein vom Staudruck erzeugtes Blasmittelpolster am Langprodukt (1) abgestützt ist.

3. Meßvorrichtung nach Anspruch 1 oder 2, **dadurch gekennzeichnet,** daß der Meßkopf (2) durch eine Blasmittelumspülung gekühlt ist.

4. Meßvorrichtung nach einem der Ansprüche 1 bis 3, **dadurch gekennzeichnet,** daß der Meßkopf (2) an seiner Meßseite durch eine Blasmittelströmung von sich niederschlagenden Verunreinigungen freigehalten wird.

5. Meßvorrichtung nach einem der Ansprüche 1 bis 4, **dadurch gekennzeichnet,** daß die Auswerteeinrichtung (7) von einem Temperaturmesser und/oder einem Feuchtigkeitsmesser Meßwerte erhält, die sie bei der Bestimmung der Dicke des Langproduktes (1) berücksichtigt.

6. Meßvorrichtung nach einem der Ansprüche 1 bis 5, **dadurch gekennzeichnet,** daß ein Meßsensor für die Messung des Abstandes des Meßkopfes (2) von dem Langprodukt vorgesehen ist, in Abhängigkeit von dessen Meßwert ein Stellglied für den Meßkopf (2) gesteuert wird.
